(19) Europäisches Patentamt
European Patent Office
Office européen des brevets

(11) **EP 4 636 835 A1**

(12) **EUROPEAN PATENT APPLICATION**
published in accordance with Art. 153(4) EPC

(43) Date of publication:
**22.10.2025 Bulletin 2025/43**

(21) Application number: **23924251.4**

(22) Date of filing: **22.12.2023**

(51) International Patent Classification (IPC):
*H01M 4/13* (2010.01)   *H01G 11/36* (2013.01)
*H01M 4/62* (2006.01)

(52) Cooperative Patent Classification (CPC):
**H01G 11/36; H01M 4/13; H01M 4/62;** Y02E 60/10

(86) International application number:
**PCT/JP2023/046075**

(87) International publication number:
**WO 2024/176607 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.02.2023 JP 2023024210**

(71) Applicant: **GS Yuasa International Ltd.**
**Kisshoin, Minami-ku,**
**Kyoto-shi, Kyoto 601-8520 (JP)**

(72) Inventor: **YAMATANI, Norio**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **POSITIVE ELECTRODE FOR POWER STORAGE ELEMENT, POWER STORAGE ELEMENT, AND POWER STORAGE DEVICE**

(57)    A positive electrode for an energy storage device according to an aspect of the present invention includes: a positive electrode active material layer containing a positive electrode active material and a conductive additive, in which the conductive additive includes carbon nanotubes, a content of the conductive additive in the positive electrode active material layer is 3.0% by mass or less, and a BET specific surface area of the positive electrode active material layer is 1.00 $m^2$/g or more and 3.00 $m^2$/g or less.

FIG. 1

EP 4 636 835 A1

**Description**

TECHNICAL FIELD

The present invention relates to a positive electrode for an energy storage device, an energy storage device, and an energy storage apparatus.

BACKGROUND ART

Nonaqueous electrolyte secondary batteries typified by lithium-ion secondary batteries are widely used in electronic devices such as personal computers and communication terminals, automobiles, and the like, because of their high energy density. A nonaqueous electrolyte secondary battery generally includes a pair of electrodes electrically separated by a separator and a nonaqueous electrolyte interposed between the electrodes, and is configured to be charged and discharged through the transfer of charge-carrying ions between the electrodes. As energy storage devices other than nonaqueous electrolyte secondary battery, a capacitor such as a lithium ion capacitor or an electric double layer capacitor, or an energy storage device using an electrolyte other than a nonaqueous electrolyte, and the like, have also been widely used.

The energy storage device with a high energy density and excellent output characteristics is preferred. In order to improve such performance of an energy storage device, a conductive material (conductive additive), or the like, may be added to a positive composite layer (positive electrode active material layer) (refer to Patent Literature 1).

CITATION LIST

Patent Literature

Patent Literature 1: Japanese Unexamined Patent Application Publication No. 2018-073687

DISCLOSURE OF INVENTION

PROBLEMS TO BE SOLVED BY THE INVENTION

It is considered that the energy density of the energy storage device can be increased by relatively increasing the amount of the positive electrode active material in the positive electrode active material layer. For example, by reducing the content of the conductive additive in the positive electrode active material layer, the energy density of the energy storage device can be increased. On the other hand, when the content of the conductive additive is reduced, conductive path between the positive electrode active materials may not be sufficiently formed, which could lead to increased resistance.

The present invention has been made in view of the above circumstances, and an object of the present invention is to provide a positive electrode for an energy storage device capable of reducing resistance while increasing the energy density of the energy storage device, and an energy storage device and an energy storage apparatus each having a high energy density and a low resistance.

MEANS FOR SOLVING THE PROBLEMS

A positive electrode for an energy storage device according to an aspect of the present invention includes a positive electrode active material layer containing a positive electrode active material and a conductive additive, in which the conductive additive includes carbon nanotubes, a content of the conductive additive in the positive electrode active material layer is 3.0% by mass or less, and a BET specific surface area of the positive electrode active material layer is 1.00 $m^2$/g or more and 3.00 $m^2$/g or less.

An energy storage device according to an other aspect of the present invention includes the positive electrode for an energy storage device.

An energy storage apparatus according to still another aspect of the present invention includes two or more energy storage devices. The energy storage devices include one or more of the mentioned energy storage device.

EFFECT OF THE INVENTION

The positive electrode for an energy storage device according to an aspect of the present invention can reduce the resistance while increasing the energy density of the energy storage device.

The energy storage device and the energy storage apparatus according to other aspects of the present invention have a high energy density and a low resistance.

BRIEF DESCRIPTION OF DRAWINGS

FIG. 1 is a perspective view illustrating an embodiment of an energy storage device including the positive electrode for an energy storage device.
FIG. 2 is a schematic view illustrating an embodiment of an energy storage apparatus configured by assembling a plurality of energy storage devices each including the positive electrode for an energy storage device.

DESCRIPTION OF EMBODIMENTS

First, outlines of a positive electrode for an energy storage device, an energy storage device, and an energy storage apparatus disclosed in the present description will be described.

(1) A positive electrode for an energy storage device according to an aspect of the present invention includes a positive electrode active material layer containing a positive electrode active material and a conductive additive, in which the conductive additive includes carbon nanotubes, a content of the conductive additive in the positive electrode active material layer is 3.0% by mass or less, and a BET specific surface area of the positive electrode active material layer is 1.00 $m^2$/g or more and 3.00 $m^2$/g or less.
The positive electrode for an energy storage device according to the above (1) can reduce the resistance while increasing the energy density of the energy storage device. Although the exact reason is unknown, the following explanation is presumed. In the positive electrode for an energy storage device, the content of the conductive additive is 3.0% by mass or less. In a conventional positive electrode for an energy storage device, the content of the positive electrode active material in the positive electrode active material layer is relatively large, and the energy density of the energy storage device can be increased. However, conductive path between the positive electrode active materials may not be sufficiently formed, which could lead to increased resistance. In contrast, in the positive electrode for an energy storage device described in (1) above, since the conductive additive includes carbon nanotubes, a conductive path connecting the positive electrode active materials can be easily formed with a relatively small amount of the conductive additive. In addition, since the BET specific surface area of the positive electrode active material layer is controlled to be in an appropriate range, the conductive additive is likely to be uniformly dispersed in the positive electrode active material layer. That is, a conductive path between the positive electrode active materials is uniformly and easily formed. Therefore, the positive electrode for an energy storage device according to the above (1) can reduce the resistance while increasing the energy density.
(2) In the positive electrode for an energy storage device according to (1), a content of the positive electrode active material in the positive electrode active material layer may be 95.0% by mass or more.
The positive electrode for an energy storage device according to (2) above can further increase the energy density of the energy storage device.
(3) An energy storage device according to another aspect of the present invention includes the positive electrode for an energy storage device according to (1) or (2).

The energy storage device according to (3) above includes the positive electrode for an energy storage device according to (1) or (2) above, and thus has a high energy density and a low resistance.
In the present invention, the "content (percentage of content) of the conductive additive" in the positive electrode active material layer is obtained by the following procedure, based on thermogravimetric and differential thermal analysis (TG-DTA).
First, a sample of the positive electrode active material layer, having a mass of about 10 mg (WO [mg]) is measured at room temperature with an accuracy of 0.01 mg. Next, using a thermogravimetric and differential thermal analyzer, the sample is heated from 30 °C to 900 °C at a heating rate of 2 °C/min in an air atmosphere. At this time, the mass W1 [mg] of the sample at 460 °C and the mass W2 [mg] of the sample at 700 °C are respectively measured with an accuracy of 0.01 mg. The content P m [% by mass] of the conductive additive in the positive electrode active material layer is calculated by the following formula.

$$P_m = \{(W1\text{-}W2)/W0\} \times 100$$

In the present invention, the "BET specific surface area" is a value determined from an adsorption isotherm obtained by a nitrogen gas adsorption method. Specifically, an adsorption isotherm is measured within a range of relative pressures P/P0 (P0 = about 770 mmHg) from 0 to 1 by a nitrogen gas adsorption method using liquid nitrogen. Five points are extracted from a region of the P/P0 = 0.05 to 0.3 of the obtained adsorption isotherm, BET plotting is performed, and the BET specific surface area is calculated from the y intercept and the slope of the straight line.

The sample of the positive electrode active material layer to be subjected to the measurement by the thermogravimetric and differential thermal analysis and the nitrogen gas adsorption method is prepared by the following procedure in the case where the positive electrode active material layer constitutes a positive electrode in an assembled energy storage device. The energy storage device is discharged at a constant current of 0.1 C to a discharge cutoff voltage at the time of normal use to result in a discharged state. Here, "at the time of normal use" refers to a case where the energy storage device is used by adopting charge and discharge conditions recommended or specified for the energy storage device. Next, the energy storage device in the discharged state is disassembled, the positive electrode is taken out, and components (electrolyte, and the like) attached to the positive electrode are sufficiently washed with dimethyl carbonate. Thereafter, the positive electrode is dried, and a positive electrode active material layer is collected from the dried positive electrode. Operations from the disassembly of the energy storage device to the collection of the positive electrode active material layer are performed in an argon atmosphere having a dew point of -60 °C or lower.

(4) An energy storage apparatus according to still another aspect of the present invention includes two or more energy storage devices. The energy storage devices include one or more of the energy storage device according to the above (3).

The energy storage apparatus according to the above (4) includes one or more of the energy storage device according to the above (3), and thus has a high energy density and a low resistance.

Hereinafter, a positive electrode for an energy storage device, an energy storage device, an energy storage apparatus, a method for manufacturing an energy storage device according to an embodiment of the present invention and other embodiments will be described in detail. The names of the constituent members (constituting elements) used in the embodiments may be different from the names of the constituent members (constituting elements) used in the background art.

[Positive electrode for energy storage device]

A positive electrode for an energy storage device according to an embodiment of the present invention includes a positive electrode base material and a positive electrode active material layer disposed on the positive electrode base material either directly or via an intermediate layer.

<Positive electrode base material>

The positive electrode base material has conductivity. The presence or absence of "conductivity" is determined using a volume resistivity of $10^{-2}\,\Omega\cdot cm$ measured in accordance with JIS H 0505:1975 as a threshold value. As the material of the positive electrode base material, a metal such as aluminum, titanium, tantalum, or stainless steel, or an alloy thereof is used. Among them, aluminum or an aluminum alloy is preferable from the viewpoint of voltage resistance, high conductivity, and cost. Examples of the positive electrode base material include a foil, a vapor-deposited film, a mesh, and a porous material, and a foil is preferable from the viewpoint of cost. Therefore, the positive electrode base material is preferably an aluminum foil or an aluminum alloy foil. Examples of aluminum and aluminum alloys include A1085, A3003, and A1N30 specified in JIS H 4000:2014 or JIS H 4160:2006.

The average thickness of the positive electrode base material is preferably 3 $\mu$m or more and 50 $\mu$m or less, more preferably 5 $\mu$m or more and 40 $\mu$m or less, still more preferably 8 $\mu$m or more and 30 $\mu$m or less, and particularly preferably 10 $\mu$m or more and 25 $\mu$m or less. When the average thickness of the positive electrode base material is within the above range, the energy density per volume of the energy storage device can be increased while increasing the strength of the positive electrode base material.

The intermediate layer is a layer disposed between the positive electrode base material and the positive electrode active material layer. The intermediate layer reduces the contact resistance between the positive electrode base material and the positive electrode active material layer by containing a conductive additive such as carbon particles. The intermediate layer is not particularly limited in terms of its configuration, and includes, for example, a binder and a conductive additive. This conductive additive may be the same as the conductive additive in the positive electrode active material layer described later.

<Positive electrode active material layer>

In one embodiment of the present invention, the positive electrode active material layer contains a positive electrode active material and a conductive additive. The positive electrode active material layer contains optional components such as a binder, a thickener, and a filler, as necessary.

The positive electrode active material can be appropriately selected from any known positive electrode active materials. As the positive electrode active material for a lithium-ion secondary battery, a material capable of occluding and releasing lithium ions is usually used. Examples of the positive electrode active material include lithium transition metal composite oxides having an $\alpha$-NaFeO$_2$-type crystal structure, lithium transition metal composite oxides having a spinel-type crystal structure, a polyanionic compound, a chalcogen compound, and sulfur. Examples of the lithium transition metal composite oxides having an $\alpha$-NaFeO$_2$-type crystal structure include Li[Li$_x$Ni$_{(1-x)}$]O$_2$(0≤x<0.5), Li[Li$_x$Ni$_\gamma$Co$_{(1-x-\gamma)}$]O$_2$ (0≤x<0.5, 0<γ<1, 0<1-x-γ), Li[Li$_x$Co$_{(1-x)}$]O$_2$(0≤x<0.5), Li[Li$_x$Ni$_\gamma$Mn$_{(1-x-\gamma)}$]O$_2$(0≤x<0.5, 0<γ<1, 0<1-x-γ), Li[Li$_x$Ni$_\gamma$Mn$_\beta$Co$_{(1-x-\gamma-\beta)}$]O$_2$(0≤x<0.5, 0<γ, 0<β, 0.5<γ+β<1, 0<1-x-γ-β), and Li[Li$_x$Ni$_\gamma$Mn$_\beta$Al$_{(1-x-\gamma-\beta)}$]O$_2$(0≤x<0.5, 0<γ, 0<β, 0.5<γ+β<1, 0<1-x-γ-β). Examples of the lithium transition metal composite oxides having a spinel-type crystal structure include Li$_x$Mn$_2$O$_4$ and Li$_x$Ni$_\gamma$Mn$_{(2-\gamma)}$O$_4$. Examples of the polyanionic compound include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogen compound include titanium disulfide, molybdenum disulfide, and molybdenum dioxide. The atoms or polyanions in these materials may be partially substituted with atoms or anionic species of other elements. The surfaces of these materials may be coated with other materials. In the positive electrode active material layer, one of these materials may be used alone, or two or more of these materials may be mixed and used.

As the positive electrode active material, from the viewpoint of increasing the energy density, lithium transition metal composite oxides are preferable, and lithium transition metal composite oxides having an $\alpha$-NaFeO$_2$-type crystal structure are more preferable, lithium transition metal composite oxides represented by the chemical formula Li [Li$_x$Ni$_\gamma$Mn$_\beta$Co$_{(1-x-\gamma-\beta)}$]O$_2$(0≤x<0.5, 0<γ, 0<β, 0.5<γ+β<1, 0<1-x-γ-β) are further preferable, and lithium transition metal composite oxides having 0.55≤γ in the above chemical formula are still further preferable.

The positive electrode active material is usually in the form of particles (powder). The lower limit of the average particle size of the positive electrode active material is preferably 0.1 μm, more preferably 1 μm, and still more preferably 3 μm. On the other hand, the upper limit of the average particle size of the positive electrode active material is preferably 20 μm, more preferably 16 μm, and still more preferably 12 μm. When the average particle size of the positive electrode active material is set to the above lower limit or more, the positive electrode active material is easily manufactured or handled. When the average particle size of the positive electrode active material is the upper limit or less, the electron conductivity of the positive electrode active material layer improves. The average particle size of the positive electrode active material may be any one of the lower limits or more and any one of the upper limits or less. When a composite of a positive electrode active material and another material is used, the average particle size of the composite is defined as the average particle size of the positive electrode active material. The "average particle size" means a value at which a volume-based cumulative distribution calculated in accordance with JIS Z 8819-2:2001 is 50% on the basis of a particle size distribution measured by a laser diffraction/scattering method applied to a diluted liquid obtained by diluting particles with a solvent in accordance with JIS Z 8825:2013. It has been confirmed that the average particle size based on the above measurement substantially coincides with an average particle size measured by extracting 100 positive electrode active material particles from a scanning electron microscope (SEM) image obtained from the positive electrode active material layer by using a scanning electron microscope (SEM) while avoiding extremely large positive electrode active material particles and extremely small positive electrode active material particles. The particle size of each positive electrode active material particle in the measurement from the SEM image is defined as the Feret diameter, and the volume of each positive electrode active material particle is calculated as a sphere having the Feret diameter as the diameter.

In order to obtain a powder having a predetermined particle size, a pulverizer, a classifier, or the like, is used. Examples of the pulverization method include a method using a mortar, a ball mill, a sand mill, a vibrating ball mill, a planetary ball mill, a jet mill, an opposed jet mill, a spiral jet mill, a sieve, or the like. At the time of pulverization, wet pulverization in the presence of water or an organic solvent such as hexane can also be used. As a classification method, a sieve, an air classifier, or the like, is used as necessary in both a dry method and a wet method.

The content of the positive electrode active material in the positive electrode active material layer is preferably 95.0% by mass or more and 99.0% by mass or less, more preferably 96.0% by mass or more and 99.0% by mass or less, and still more preferably 97.0% by mass or more and 99.0% by mass or less. When the content of the positive electrode active material is within the above range, both high energy density and manufacturability of the positive electrode active material layer can be achieved.

In one embodiment of the present invention, the conductive additive includes carbon nanotubes (CNTs). Examples of the CNTs include a single-walled carbon nanotubes (SWCNTs) formed of one layer of graphene, and a multi-walled carbon nanotubes (MWCNTs) formed of two or more layers (for example, 2 to 20 layers, typically two to 60 layers) of graphene. The CNTs may include SWCNTs and MWCNTs at an arbitrary ratio (e.g., the mass ratio of SWCNTs:MWCNTs being 100:0 to 0:100, and preferably 100:0 to 80:20). Those consisting essentially of SWCNTs are particularly preferable. The structure of the CNTs is not particularly limited, and may be any one of a chiral (helical) type, a zigzag type, or an armchair type. In addition, the CNTs may contain catalyst metals used in the synthesis of the CNTs (for example, Fe, Co, and platinum group elements (Ru, Rh, Pd, Os, Ir, and Pt)), or the like.

The conductive additive may include a material other than CNTs from the viewpoint of appropriately controlling the BET specific surface area of the positive electrode active material layer described later. Examples of such a material include carbonaceous materials other than CNTs, metals, and conductive ceramics. Examples of the carbonaceous material other than CNTs include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen Black. Examples of the graphene-based carbon include graphene and fullerene. These materials may be in the form of powder, fiber, or the like. Materials other than CNTs may be used either individually or as a mixture of two or more kinds. Further, CNTs and these materials may be used in combination. For example, a composite material of CNTs and carbon black may be used. Among the materials other than CNTs, carbon black is preferable from the viewpoint of electron conductivity and coatability, and acetylene black is particularly preferable.

The lower limit of the content of the conductive additive in the positive electrode active material layer is preferably 0.1% by mass, more preferably 0.3% by mass, and still more preferably 0.5% by mass. On the other hand, the upper limit of the content of the conductive additive in the positive electrode active material layer is 3.0% by mass, preferably 2.5% by mass, more preferably 2.0% by mass, and still more preferably 1.5% by mass. When the content of the conductive additive is the above lower limit or more, the electron conductivity of the positive electrode active material layer improves. In addition, when the content of the conductive additive is the upper limit or less, the energy density of the energy storage device can be increased. The content of the conductive additive may be any of the lower limits or more and any of the upper limits or less.

The lower limit of the content of the carbon nanotubes (CNTs) in the positive electrode active material layer is preferably 0.1% by mass, more preferably 0.2% by mass, and still more preferably 0.3% by mass. On the other hand, the upper limit of the content of the CNTs in the positive electrode active material layer is preferably 2.0% by mass, more preferably 1.5% by mass, and still more preferably 1.0% by mass. When the content of the CNTs is the above lower limit or more, the electron conductivity of the positive electrode active material layer improves. When the content of the CNTs is the upper limit or less, it is easy to appropriately control the BET specific surface area of the positive electrode active material layer described below. The content of the CNTs may be any of the lower limits or more and any of the upper limits or less.

Examples of the binder include, for example, thermoplastic resins such as fluororesins (such as polytetrafluoroethylene (PTFE), polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluoro rubber; and polysaccharide polymers.

The content of the binder in the positive electrode active material layer is preferably 1% by mass or more and 10% by mass or less, and more preferably 1.5% by mass or more and 9% by mass or less. When the content of the binder is within the above range, the positive electrode active material can be stably held.

Examples of the thickener include polysaccharide polymers such as carboxymethyl cellulose (CMC) and methyl cellulose. When the thickener has a functional group that reacts with lithium, or the like, this functional group may be deactivated in advance by methylation, or the like. When a thickener is used, the content of the thickener in the positive electrode active material layer can be 0.1% by mass or more and 8% by mass or less, and is usually preferably 5% by mass or less and more preferably 2% by mass or less. The technique disclosed herein can be preferably implemented in an embodiment in which the positive electrode active material layer does not contain a thickener.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; substances derived from mineral resources such as talc, montmorillonite, boehmite, zeolite, apatite, kaolin, mullite, spinel, olivine, sericite, bentonite, and mica; and synthetic substances thereof. When the filler is used, the content of the filler in the positive electrode active material layer can be 0.1% by mass or more and 8% by mass or less, and is usually preferably 5% by mass or less, and more preferably 2% by mass or less. The technique disclosed herein can be preferably implemented in an embodiment in which the positive electrode active material layer does not contain a filler.

The positive electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W, as components other than the positive electrode active material, the conductive additive, the binder, the thickener, and the filler.

The lower limit of the BET specific surface area of the positive electrode active material layer is 1.00 $m^2/g$, preferably 1.02 $m^2/g$, and more preferably 1.05 $m^2/g$. On the other hand, the upper limit of the BET specific surface area of the positive electrode active material layer is 3.00 $m^2/g$, preferably 2.50 $m^2/g$, and more preferably 2.00 $m^2/g$. When the BET specific surface area of the positive electrode active material layer is the above lower limit or more, the conductive additive is easily uniformly dispersed in the positive electrode active material layer. That is, a conductive path between the positive electrode active materials is uniformly formed, and resistance can be reduced. When the BET specific surface area of the positive electrode active material layer is the above upper limit or less, a conductive path between the positive electrode active materials can be easily formed even with a small amount of the conductive additive. When the BET specific surface area of the positive electrode active material layer is the above upper limit or less, decomposition of an electrolyte, or the like, with which the positive electrode for an energy storage device is in contact can be suppressed, and a decrease in capacity during endurance (during charge and discharge cycles, or the like) can be suppressed. The BET specific surface area of the positive electrode active material layer may be any of the lower limits or more and any of the upper limits or less. The BET specific surface area of the positive electrode active material layer can be controlled by, for example, adjusting the content ratio of the conductive additive, the kneading method or the number of rotations of the kneader at the time of preparing the positive electrode mixture, and the press pressure at the time of forming the positive electrode active material layer on the positive electrode base material.

[Energy storage device]

An energy storage device according to an embodiment of the present invention includes: an electrode body including the positive electrode for an energy storage device (hereinafter, also referred to as a "positive electrode"), a negative electrode, and a separator; an electrolyte; and a container for accommodating the electrode body and the electrolyte. The electrode body is usually a stacked type in which a plurality of positive electrodes and a plurality of negative electrodes are stacked with separators interposed therebetween, or a wound type in which positive electrodes and negative electrodes are wound in a state of being stacked with separator(s) interposed therebetween. The electrolyte exists in a state of being impregnated in the positive electrode, the negative electrode, and the separator. As an example of the energy storage device, a nonaqueous electrolyte secondary battery (hereinafter, also simply referred to as "secondary battery") will be described. In addition, since the configuration of the positive electrode for an energy storage device is as described above, the description thereof will be omitted.

<Negative electrode>

The negative electrode includes a negative electrode base material and a negative electrode active material layer disposed on the negative electrode base material either directly or via an intermediate layer. The intermediate layer is not particularly limited in its configuration, and can be selected from the configurations exemplified for the positive electrode, for example.

The negative electrode base material has conductivity. As the material of the negative electrode base material, a metal such as copper, nickel, stainless steel, nickel-plated steel, or aluminum, an alloy thereof, a carbonaceous material, or the like, is used. Among them, copper or a copper alloy is preferable. Examples of the negative electrode base material include a foil, a vapor-deposited film, a mesh, and a porous material; and a foil is preferable from the viewpoint of cost. Therefore, the negative electrode base material is preferably a copper foil or a copper alloy foil. Examples of the copper foil include a rolled copper foil and an electrolytic copper foil.

The average thickness of the negative electrode base material is preferably 2 $\mu$m or more and 35 $\mu$m or less, more preferably 3 $\mu$m or more and 30 $\mu$m or less, further preferably 4 $\mu$m or more and 25 $\mu$m or less, particularly preferably 5 $\mu$m or more and 20 $\mu$m or less. When the average thickness of the negative electrode base material is within the above range, the energy density per volume of the energy storage device can be increased while increasing the strength of the negative electrode base material.

The negative electrode active material layer includes a negative electrode active material. The negative electrode active material layer contains optional components such as the conductive additive, a binder, a thickener, and a filler, as necessary. Optional components such as the conductive additive, a binder, a thickener, and a filler can be selected from the materials exemplified for the positive electrode.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as components other than the negative electrode active material, the conductive additive, the binder, the thickener, and the filler.

The negative electrode active material can be appropriately selected from known negative electrode active materials. As the negative electrode active material for a lithium-ion secondary battery, a material capable of occluding and releasing lithium ions is usually used. Examples of the negative electrode active material include carbonaceous materials such as metal Li; metals or semimetals such as Si and Sn; metal oxides or metalloid oxides such as Si oxides, Ti oxides, and Sn oxides; titanium-containing oxides such as $Li_4Ti_5O_{12}$, $LiTiO_2$, $TiNb_2O_7$; polyphosphate compounds; silicium carbide; carbon materials such as graphite and non-graphitic carbons (graphitizable carbons or non-graphitizable carbons). Among these materials, graphite and non-graphitic carbon are preferred. In the negative electrode active material layer, one of these materials may be used alone, or two or more of these materials may be mixed and used.

The term "graphite" refers to a carbon material in which the average interplanar spacing ($d_{002}$) of a plane (002) determined by an X-ray diffraction method before charge and discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon " refers to a carbon material in which the average interplanar spacing ($d_{002}$) of a plane (002) determined by an X-ray diffraction method before charge and discharge or in a discharged state is 0.34 nm or more and 0.42 nm or less. Examples of the non-graphitic carbon include non-graphitizable carbon and graphitizable carbon. Examples of the non-graphitic carbon include resin-derived materials, petroleum pitch and petroleum pitch-derived materials, petroleum coke and petroleum coke-derived materials, plant-derived materials, and alcohol-derived materials.

Here, the "discharged state" of a carbon material refers to a state in which the carbon material, serving as a negative electrode active material, has been discharged so that lithium ions, which can be occluded and released during charge and discharge, are sufficiently released. For example, in a half-cell using a negative electrode containing a carbon material as a negative electrode active material as a working electrode and metal Li as a counter electrode, the "discharged state" of the carbon material refers to a state in which the open circuit voltage is 0.7 V or more.

The term "non-graphitizable carbons" refers to carbon materials in which the $d_{002}$ is 0.36 nm or more and 0.42 nm or less.

The term "graphitizable carbons" refers to carbon materials having the $d_{002}$ of 0.34 nm or more and less than 0.36 nm.

The negative electrode active material is usually in the form of particles (powder). The average particle size of the negative electrode active material can be, for example, 1 nm or more and 100 $\mu$m or less. When the negative electrode active material is a carbon material, a titanium-containing oxide, or a polyphosphate compound, the average particle size thereof may be 1 $\mu$m or more and 100 $\mu$m or less. When the negative electrode active material is Si, Sn, Si oxides, Sn oxides, or the like, the average particle size thereof may be 1 nm or more and 1 $\mu$m or less. When the average particle size of the negative electrode active material is the above lower limit or more, the negative electrode active material is easily manufactured or handled. When the average particle size of the negative electrode active material is the above upper limit or less, the electron conductivity of the negative electrode active material layer improves. In order to obtain a powder having a predetermined particle size, a pulverizer, a classifier, or the like, is used. The pulverization method and the classification method can be selected, for example, from the methods exemplified for the positive electrode. When the negative electrode active material is a metal such as metal Li, the negative electrode active material layer may be in a foil form.

The content of the negative electrode active material in the negative electrode active material layer is preferably 60% by mass or more and 99% by mass or less, more preferably 90% by mass or more and 98% by mass or less. When the content of the negative electrode active material is within the above range, both high energy density and manufacturability of the negative electrode active material layer can be achieved. In the case where the negative electrode active material is metal Li, the content of the negative electrode active material in the negative electrode active material layer may be 99% by mass or more, and may be 100% by mass.

<Separator>

The separator can be appropriately selected from known separators. As the separator, for example, a separator formed of only a base material layer, a separator in which a heat-resistant layer containing heat-resistant particles and a binder is formed on one surface or both surfaces of a base material layer, or the like, can be used. Examples of the shape of the base material layer of the separator include a woven fabric, a nonwoven fabric, and a porous resin film. Among these shapes, a porous resin film is preferable from the viewpoint of strength, and a nonwoven fabric is preferable from the viewpoint of liquid retainability of the nonaqueous electrolyte. As the material of the base material layer of the separator, for example, polyolefins such as polyethylene and polypropylene are preferable from the viewpoint of a shutdown function, and for example, polyimide, aramid, and the like, are preferable from the viewpoint of oxidative decomposition resistance. A composite material of these resins may be used as the base material layer of the separator.

Heat-resistant particles contained in the heat-resistant layer preferably have a mass loss of 5% or less when heated from room temperature to 500 °C in an air atmosphere at 1 atm, and more preferably have a mass loss of 5% or less when heated from room temperature to 800 °C. Examples of the material having a mass loss of a predetermined amount or less include inorganic compounds. Inorganic compounds include, for example, oxides such as iron oxide, silicon oxide, aluminum oxide, titanium oxide, zirconium oxide, calcium oxide, strontium oxide, barium oxide, magnesium oxide, aluminosilicates; nitrides such as silicon nitride and aluminum nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica; and synthetic substances thereof. As the inorganic compound, each of these substances, whether in its individual form or as a composite, may be used alone, or two or more of them may be mixed and used in combination. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. Here, the term "porosity" refers to a value based on volume, and means a value measured by a mercury porosimeter.

As the separator, a polymer gel composed of a polymer and an electrolyte may be used. Examples of the polymer include polyacrylonitrile; polyethylene oxide; polypropylene oxide; polymethyl methacrylate; polyvinyl acetate; polyvinylpyrrolidone, and polyvinylidene fluoride. The use of the polymer gel has an effect of suppressing liquid leakage. As the separator, the above-described porous resin film or nonwoven fabric may be used in combination with the polymer gel.

<Nonaqueous electrolyte>

As the nonaqueous electrolyte, a nonaqueous electrolytic solution may be used. The nonaqueous electrolytic solution contains a nonaqueous solvent and an electrolyte salt dissolved in this nonaqueous solvent.

The nonaqueous solvent can be appropriately selected from known nonaqueous solvents. Examples of the nonaqueous solvent include cyclic carbonates, linear carbonates, carboxylic acid esters, phosphoric acid esters, sulfonic acid esters, ethers, amides, and nitriles. As the nonaqueous solvent, those obtained by substituting a part of hydrogen atoms contained in these compounds with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among them, EMC is preferable.

As the nonaqueous solvent, a cyclic carbonate or a linear carbonate is preferably used, and a cyclic carbonate and a linear carbonate are more preferably used in combination. When the cyclic carbonate is used, dissociation of the electrolyte salt can be promoted to improve the ionic conductivity of the nonaqueous electrolytic solution. When the linear carbonate is used, the viscosity of the nonaqueous electrolytic solution can be suppressed to be low. When a cyclic carbonate and a linear carbonate are used in combination, the volume ratio of the cyclic carbonate to the linear carbonate (cyclic carbonate: linear carbonate) is preferably, for example, in the range of 5:95 to 50:50.

The electrolyte salt can be appropriately selected from known electrolyte salts. The electrolyte salt may be selected from a lithium salt, a sodium salt, a potassium salt, a magnesium salt, and an onium salt. Among them, a lithium salt is preferable.

Examples of the lithium salt include inorganic lithium salts such as $LiPF_6$, $LiPO_2F_2$, $LiBF_4$, $LiClO_4$, and $LiN(SO_2F)_2$; oxalate-based lithium salts such as lithium bis(oxalato) borate (LiBOB), lithium difluoro(oxalato)borate (LiFOB); lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among them, inorganic lithium salts are preferable, and $LiPF_6$ is more preferable.

The content of the electrolyte salts in the nonaqueous electrolytic solution is preferably 0.1 mol/dm$^3$ or more and 2.5 mol/dm$^3$ or less, more preferably 0.3 mol/dm$^3$ or more and 2.0 mol/dm$^3$ or less, further preferably 0.5 mol/dm$^3$ or more and 1.7 mol/dm$^3$ or less, and particularly preferably 0.7 mol/dm$^3$ or more and 3 mol/dm$^3$ or less, at 20 °C under 1 atm. When the content of the electrolyte salt is within the above range, the ionic conductivity of the nonaqueous electrolytic solution can be enhanced.

The nonaqueous electrolytic solution may contain an additive in addition to the nonaqueous solvent and the electrolyte salt. Examples of the additive include halogenated carbonate esters such as fluoroethylene carbonate (FEC) and difluoroethylene carbonate (DFEC); oxalate-based salts such as lithium bis(oxalato)borate (LiBOB), lithium difluoro(oxalato)borate (LiFOB), and lithium bis(oxalato)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; as well as ethylene sulfite, propylene sulfite, dimethyl sulfite, methyl methanesulfonate, busulfan, methyl p-toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, tetrakis(trimethylsilyl)titanate, lithium monofluorophosphate, and lithium difluorophosphate. One of these additives may be used alone, or two or more of these additives may be mixed and used.

The content of the additive contained in the nonaqueous electrolytic solution is preferably 0.01% by mass or more and 10% by mass or less, more preferably 0.1% by mass or more and 7% by mass or less, further preferably 0.2% by mass or more and 5% by mass or less, and particularly preferably 0.3% by mass or more and 3% by mass or less, with respect to the total mass of the nonaqueous electrolytic solution. When the content of the additive is within the above range, the capacity retention performance or the charge and discharge cycle performance after high-temperature storage can be improved, and the safety can be further improved.

As the nonaqueous electrolyte, a solid electrolyte may be used, or a nonaqueous electrolytic solution and a solid electrolyte may be used in combination.

The solid electrolyte can be selected from any materials that have ionic conductivity such as lithium, sodium, and calcium and are solid at room temperature (for example, 15 °C to 25 °C). Examples of the solid electrolyte include a sulfide solid electrolyte, an oxide solid electrolyte, a nitride solid electrolyte, and a polymer solid electrolyte.

In the case of a lithium-ion secondary battery, examples of sulfide solid electrolytes include $Li_2S-P_2S_5$, $LiI-Li_2S-P_2S_5$, and $Li_{10}Ge-P_2S_{12}$.

The shape of the energy storage device of the present embodiment is not particularly limited, and examples thereof include a cylindrical battery, a prismatic battery, a flat-type battery, a coin battery, and a button battery.

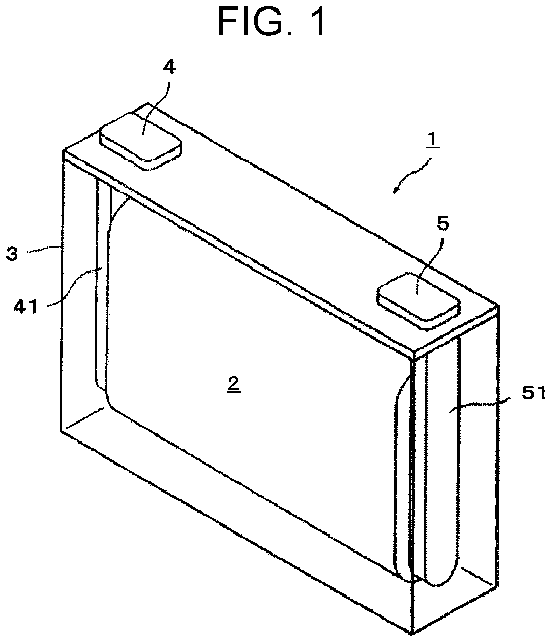

FIG. 1 illustrates an energy storage device 1 as an example of a prismatic battery. FIG. 1 is a perspective view of the inside of the container. An electrode body 2 having a positive electrode and a negative electrode wound with a separator interposed therebetween is housed in a prismatic container 3. The positive electrode is electrically connected to a positive electrode terminal 4 via a positive electrode lead 41. The negative electrode is electrically connected to a negative electrode terminal 5 via a negative electrode lead 51.

[Energy storage apparatus]

The energy storage device according to the present embodiment can be mounted as an energy storage unit (battery module) configured by assembling a plurality of energy storage devices in a power source for an automobile such as electric vehicles (EVs), hybrid electric vehicles (HEVs), or plug-in hybrid electric vehicles (PHEV), a power source for electronic devices such as personal computers or communication terminals, a power source for power storage, or the like. In this case, the technique according to the present invention may be applied to at least one energy storage device included in the energy storage unit.

An energy storage apparatus according to an embodiment of the present invention includes two or more energy storage devices, and one or more of the energy storage devices according to an embodiment of the present invention (hereinafter, referred to as "second embodiment"). The technique according to an embodiment of the present invention may be applied to at least one energy storage device included in the energy storage apparatus according to the second embodiment. The energy storage apparatus may include one energy storage device according to an embodiment of the present invention, and one or more energy storage devices not according to the embodiment of the present invention, or may include two or more energy storage devices according to the embodiment of the present invention.

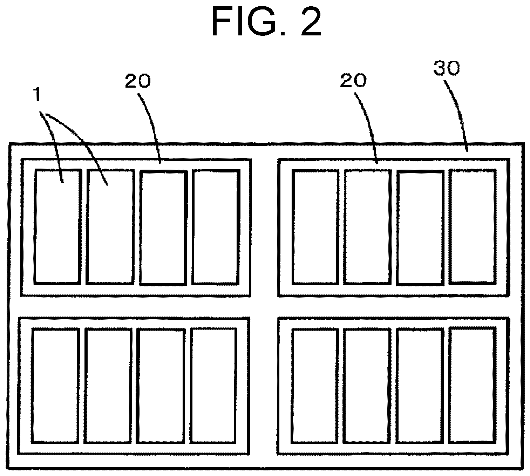

FIG. 2 illustrates an example of an energy storage apparatus 30 according to the second embodiment in which energy storage units 20 in each of which two or more electrically connected energy storage devices 1 are assembled are further assembled. The energy storage apparatus 30 may include a bus bar (not illustrated) that electrically connects two or more energy storage devices 1, a bus bar (not illustrated) that electrically connects two or more energy storage units 20, and the like. The energy storage unit 20 or the energy storage apparatus 30 may include a state monitoring device (not illustrated) that monitors the state of one or more energy storage devices.

[Method for manufacturing energy storage device]

The method for manufacturing the energy storage device of the present embodiment can be appropriately selected from known methods. The method for manufacturing includes, for example, preparing an electrode body, preparing a nonaqueous electrolyte, and housing the electrode body and the nonaqueous electrolyte in a container. Preparing the electrode body includes preparing a positive electrode and a negative electrode, and forming the electrode body by stacking or winding the positive electrode and the negative electrode with a separator interposed therebetween.

Housing the nonaqueous electrolyte in the container can be appropriately selected from known methods. For example, when a nonaqueous electrolytic solution is used as the nonaqueous electrolyte, the nonaqueous electrolytic solution may be injected through an inlet formed in the container, and then the inlet may be sealed.

[Other embodiments]

The positive electrode for an energy storage device and the energy storage device of the present invention are not limited to the above-described embodiments, and various modifications may be made without departing from the scope of the present invention. A configuration of an other embodiment can be added to a configuration of an embodiment, or a part of a configuration of an embodiment can be replaced with a configuration of an other embodiment or with a known technique. A part of a configuration of an embodiment can be omitted. A known technique can be added to a configuration of an embodiment.

In the above embodiment, the case where the positive electrode for an energy storage device is used in a chargeable and dischargeable nonaqueous electrolyte secondary battery (for example, a lithium-ion secondary battery) has been described. However, any type, shape, size, capacity, and the like, of the energy storage device, in which the positive electrode for an energy storage device is used, can be used. The present invention can also be applied to various secondary batteries, capacitors such as electric double layer capacitors or lithium ion capacitors, and energy storage devices using electrolytes other than nonaqueous electrolytes.

Embodiment examples

Hereinafter, a manufacturing procedure of a positive electrode, a manufacturing procedure of an energy storage device, and an evaluation procedure of the energy storage device in embodiment examples 1 and 2 and comparative examples 1 to 6 will be described as embodiment examples. The present invention is not limited to the following embodiment examples.

[Embodiment example 1]

As a positive electrode active material, $LiNi_{0.6}Mn_{0.2}Co_{0.2}O_2$ (hereinafter also referred to as "active material A") was prepared. The average particle size of this positive electrode active material was 12 $\mu$m. This average particle size is a value measured by the above-described method. Next, a mixture containing the positive electrode active material, a conductive additive, and polyvinylidene fluoride (PVDF) as a binder at a mass ratio of 97.0:1.5:1.5 in terms of solid content in N-methylpyrrolidone (NMP) as a dispersion medium was prepared. As the conductive additive, acetylene black (AB) and carbon nanotubes (CNTs) were used, and their contents in the mixture were set to 1.0% by mass and 0.5% by mass, respectively. As the carbon nanotubes, multi-walled carbon nanotubes (MWCNTs) were used.

Using a high-speed mixer ("FILMIX" (registered trademark)) manufactured by PRIMIX Corporation) as a kneader, the mixture was kneaded for 20 seconds at a rotational speed of 7,600 rpm to prepare a positive electrode mixture paste. The positive electrode mixture paste was directly applied to both surfaces of an aluminum foil as a positive electrode base material, dried, and then pressed. Thus, a positive electrode of embodiment example 1, in which positive electrode active material layers were stacked on both surfaces of the positive electrode base material, was obtained.

[Comparative example 1]

A positive electrode of comparative example 1 was obtained in the same manner as in embodiment example 1, except that the mass ratio of the positive electrode active material, acetylene black (AB)) as the conductive additive, and the binder in the mixture was 94.5:4.0:1.5 in terms of solid content, and a positive electrode mixture paste was prepared by kneading the mixture using, as a kneader, a hybrid mixer ("Awatori Rentaro" (registered trademark) manufactured by Thinky Corporation) for 5 minutes at a rotational speed of 2,000 rpm.

[Comparative example 2]

A positive electrode of comparative example 2 was obtained in the same manner as in embodiment example 1, except that the mass ratio of the positive electrode active material, the carbon nanotubes (CNTs) as the conductive additive, and the binder in the mixture was 97.9:0.6:1.5 in terms of solid content.

[Embodiment example 2]

A positive electrode of embodiment example 2 was obtained in the same manner as in embodiment example 1 except that $LiNi_{0.83}Mn_{0.05}Co_{0.12}O_2$ (hereinafter, also referred to as "active material B") was used as the positive electrode active material. The positive electrode active material had an average particle size of 10 $\mu$m.

[Comparative examples 3 and 6]

A positive electrode of comparative example 3 was obtained in the same manner as in embodiment example 2 except that the mass ratio of the positive electrode active material, acetylene black (AB) as the conductive additive, and the binder in the mixture was set to 94.5:4.0:1.5 in terms of solid content, and the above-described hybrid mixer was used in the same manner as in comparative example. In addition, a positive electrode of comparative example 6 was obtained in the same manner as in embodiment example 2 except that the above-described hybrid mixer was used in the same manner as in comparative example 1.

[Comparative examples 4 and 5]

A positive electrode of comparative example 4 was obtained in the same manner as in embodiment example 2 except that the mass ratio of the positive electrode active material, the carbon nanotubes (CNTs) as the conductive additive, and the binder in the mixture was set to 97.9:0.6:1.5 in terms of solid content. A positive electrode of comparative example 5 was obtained in the same manner as in embodiment example 2 except that the mass ratio of the positive electrode active material, the carbon nanotubes (CNTs) as the conductive additive, and the binder in the mixture was 97.5:1.0:1.5 in terms of solid content.

The content of the conductive additive and the BET specific surface area of the positive electrode active material layer in each of the obtained positive electrodes are shown in Table 1. The BET specific surface area of the positive electrode active material layer is a value measured by the above-described method.

[Manufacturing of energy storage device]

For each of the obtained positive electrodes, an energy storage device was manufactured as follows.

(Preparation of negative electrode)

A negative electrode mixture paste was prepared by mixing graphite (Gr) as a negative electrode active material, styrene-butadiene rubber (SBR) as a binder, carboxylmethyl cellulose (CMC) as a thickener, and water as a dispersion medium. The mass ratio of Gr, SBR, and CMC was 96:2:2 (in terms of solid content). The negative electrode mixture paste was applied to both surfaces of a copper foil as a negative electrode base material, and dried. Thereafter, roll pressing was performed to obtain a negative electrode.

(Preparation of nonaqueous electrolyte)

$LiPF_6$ was dissolved as an electrolyte salt at a concentration of $1.2\,mol/dm^3$ in a nonaqueous solvent in which EC, DMC, and EMC were mixed in a volume ratio of 30:35:35, thereby using the obtained solution as a nonaqueous electrolyte.

(Manufacturing of energy storage device)

Each of the above-described positive electrodes and the above-described negative electrode were stacked with a separator of a polyolefin microporous film interposed therebetween to manufacture an electrode body. This electrode body was housed in a container made of a metal-resin composite film, the nonaqueous electrolyte was injected into the container, and then the container was sealed by thermal welding to obtain an energy storage device.

[Evaluation]

(Initial charge and discharge)

Each of the energy storage devices produced from each of the positive electrodes was subjected to initial charge and discharge under the following conditions.

In a constant temperature chamber at 25 °C, constant current charge was performed at a charge current of 1.0 C to a charge cutoff voltage of 4.20 V, and then constant voltage charging was performed at 4.20 V. The charging was terminated until the charge current reached 0.01 C. This was followed by a 10 minute rest period. Thereafter, constant current discharge was performed at a current of 0.2 C to a discharge cutoff voltage of 2.50 V. This charge and discharge cycle was repeated twice. Based on the second discharge, the initial discharge capacity [Ah] and the average discharge voltage [V] of the energy storage device were measured.

For each energy storage device, the energy density per volume [Wh/L] of the energy storage device was obtained by dividing the product of the initial discharge capacity and the average discharge voltage by the volume of the energy storage device. The energy density of each energy storage device is indicated in Table 1. Note that the energy densities of embodiment example 1 and comparative examples 1 and 2 in Table 1 are relative values based on the energy density of the energy storage device obtained from comparative example 1, and the energy densities of embodiment example 2 and comparative examples 3 to 6 are relative values based on the energy density of the energy storage device obtained from comparative example 3.

(Direct current resistance test)

The direct current resistance (DCR) of each energy storage device after the initial charge and discharge was evaluated by the following procedure.

In a constant temperature chamber at 25 °C, constant current charge was performed at a current of 0.1 C until a charge amount corresponding to 50% of the initial discharge capacity was reached. Under this condition, the state of charge (SOC) of each energy storage device was set to 50%. Next, each of the energy storage devices was stored in a constant temperature chamber at 25 °C for 4 hours, and then discharged at a current of 0.2 C, 0.5 C, and 1.0 C, respectively, for 30 seconds. After each discharge, constant current charge was performed at a current of 0.1 C to adjust the SOC to 50%. From a graph of current-voltage performance obtained by plotting the voltage 10 seconds after the start of discharge in each discharge on the vertical axis and the discharge current on the horizontal axis, the direct current resistance [m $\Omega$], which is a value corresponding to the gradient, was determined as the DCR at 25 °C. The direct current resistance (DCR) of each energy storage device is illustrated in Table 1. However, the direct current resistance (DCR) in Table 1 for embodiment example 1 and comparative examples 1 and 2 is a relative value based on the DCR of the energy storage device obtained from comparative example 1, and the direct current resistance (DCR) in Table 1 for embodiment example 2 and comparative examples 3 to 6 is a relative value based on the DCR of the energy storage device obtained from comparative example 3.

[Table 1]

| | | Comparative example 1 | Comparative example 2 | Embodiment example 1 | Comparative example 3 | Comparative example 4 | Comparative example 5 | Comparative example 6 | Embodiment example 2 |
|---|---|---|---|---|---|---|---|---|---|
| Positive electrode active material | | A | A | A | B | B | B | B | B |
| Conductive additive [%] | AB | 4.0 | 0.0 | 1.0 | 4.0 | 0.0 | 0.0 | 1.0 | 1.0 |
| | CNTs | 0.0 | 0.6 | 0.5 | 0.0 | 0.6 | 1.0 | 0.5 | 0.5 |
| BET of positive electrode mixture layer [m²/g] | | 2.09 | 0.70 | 1.09 | 2.22 | 0.72 | 0.89 | 0.79 | 1.07 |
| Energy density | | 100 | 103 | 102 | 100 | 102 | 102 | 102 | 102 |
| DCR at 25 °C | | 100 | 103 | 101 | 100 | 107 | 102 | 103 | 101 |

14

As illustrated in Table 1, the total content of the conductive additive in the positive electrode active material layer is 4.0% by mass in comparative example 1, whereas it is 0.6% by mass in comparative example 2. Therefore, in comparative example 2, the relative content of the positive electrode active material (active material A) is high, and the energy density is higher than that in comparative example 1. On the other hand, in the positive electrode active material layer of comparative example 2, since the BET specific surface area is less than 1.00 $m^2/g$, the conductive path between the positive electrode active materials is not sufficiently formed, and the DCR is large (exceeding 101).

In the positive electrode active material layer of embodiment example 1, the total content of the conductive additive is as small as 1.5% by mass, and the energy density is higher than that of comparative example 1 just as in comparative example 2. The positive electrode active material layer of embodiment example 1 contained CNTs as a conductive additive and had a BET specific surface area of 1.00 $m^2/g$ or more. Therefore, in embodiment example 1, the conductive path between the positive electrode active materials is uniformly formed, and the DCR is small (101 or less).

Similarly, in the energy storage device including the active material B, the total content of the conductive additive in the positive electrode active material layer is 4.0% by mass in comparative example 3, whereas the total content is 0.6% by mass in comparative example 4. Therefore, in comparative example 4, the relative content of the positive electrode active material (active material B) is large, and the energy density is higher than that in comparative example 3. On the other hand, in the positive electrode active material layer of comparative example 4, since the BET specific surface area is less than 1.00 $m^2/g$, the conductive path between the positive electrode active materials is not sufficiently formed, and the DCR is large (exceeding 101). In comparative examples 5 and 6, the energy densities are larger than that of comparative example 3, however, the DCR is large (more than 101) because the BET specific surface area is less than 1.00 $m^2/g$. From comparative examples 4 to 6, it is inferred that it is difficult to sufficiently reduce the DCR by simply increasing the total content of the conductive additive or controlling the ratio of the components of the conductive additive.

In the positive electrode active material layer of embodiment example 2, the total content of the conductive additive is as small as 1.5% by mass, and the energy density is higher than that of comparative example 3 just as in comparative examples 4 to 6. In addition, the positive electrode active material layer of embodiment example 2 includes CNTs as the conductive additive, and the BET specific surface area is 1.00 $m^2/g$ or more. Therefore, in embodiment example 2, a conductive path between the positive electrode active materials is uniformly formed, and the DCR is small (101 or less).

From the above, it is considered that both an increase in energy density and a reduction in resistance can be achieved by controlling the BET specific surface area of the positive electrode active material layer to be in a range of a certain value while setting the total content of the conductive additive including the CNTs to be a certain value or less.

INDUSTRIAL APPLICABILITY

The present invention can be applied to energy storage devices used as power sources of electronic apparatuses such as personal computers or communication terminals, automobiles, or the like.

DESCRIPTION OF REFERENCE NUMERALS

1 Energy storage device
2 Electrode body
3 Container
4 Positive electrode terminal
41 Positive electrode lead
5 Negative electrode terminal
51 Negative electrode lead
20 Energy storage unit
30 Energy storage apparatus

**Claims**

**1.** A positive electrode for an energy storage device, comprising:

a positive electrode active material layer containing a positive electrode active material and a conductive additive, wherein
the conductive additive includes carbon nanotubes,

a content of the conductive additive in the positive electrode active material layer is 3.0% by mass or less, and a BET specific surface area of the positive electrode active material layer is 1.00 m$^2$/g or more and 3.00 m$^2$/g or less.

2. The positive electrode for an energy storage device, according to claim 1, wherein
a content of the positive electrode active material in the positive electrode active material layer is 95.0% by mass or more.

3. An energy storage device, comprising the positive electrode for an energy storage device according to claim 1 or 2.

4. An energy storage apparatus, comprising:

   two or more energy storage devices, wherein
   the energy storage devices include one or more of the energy storage device according to claim 3.

# FIG. 1

# FIG. 2

## INTERNATIONAL SEARCH REPORT

| International application No. |
| --- |
| **PCT/JP2023/046075** |

**A. CLASSIFICATION OF SUBJECT MATTER**

*H01M 4/13*(2010.01)i; *H01G 11/36*(2013.01)i; *H01M 4/62*(2006.01)i
FI:   H01M4/13; H01M4/62 Z; H01G11/36

According to International Patent Classification (IPC) or to both national classification and IPC

**B. FIELDS SEARCHED**

Minimum documentation searched (classification system followed by classification symbols)

H01M4/13; H01G11/36; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2015/012375 A1 (NISSAN MOTOR CO., LTD.) 29 January 2015 (2015-01-29) <br> paragraphs [0001], [0012], [0035], [0039], [0044], [0090]-[0104], table 1, example 1 | 1-4 |
| Y | JP 2020-149829 A (KABUSHIKI KAISHA TOSHIBA) 17 September 2020 (2020-09-17) <br> paragraphs [0065], [0087], [0090] | 1-4 |
| Y | JP 2022-091626 A (GS YUASA INTERNATIONAL LTD.) 21 June 2022 (2022-06-21) <br> paragraphs [0029], [0049] | 1-4 |

☐ Further documents are listed in the continuation of Box C.        ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **15 March 2024** | **26 March 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2023/046075**

| Patent document cited in search report | Publication date (day/month/year) | Patent family member(s) | Publication date (day/month/year) |
|---|---|---|---|
| WO 2015/012375 A1 | 29 January 2015 | US 2016/0164101 A1<br>paragraphs [0002], [0010],<br>[0044], [0048], [0054], [0109]-<br>[0128], table 1, example 1<br>EP 3026734 A1<br>KR 10-2016-0035039 A<br>CN 105580165 A | |
| JP 2020-149829 A | 17 September 2020 | US 2020/0295361 A1<br>paragraphs [0061], [0085],<br>[0088]<br>EP 3709400 A1<br>CN 111697209 A | |
| JP 2022-091626 A | 21 June 2022 | (Family: none) | |

Form PCT/ISA/210 (patent family annex) (July 2022)

**EP 4 636 835 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018073687 A